# EUROPEAN PATENT SPECIFICATION

(11) **EP 1 359 004 B1**
(45) Date of publication and mention of the grant of the patent: **11.10.2006**
(21) Application number: 03077035.8
(22) Date of filing: 29.03.1999
(51) Int. Cl.: B32B 1/00, B32B 3/26, B32B 7/02, B32B 5/32

(54) **Reinforcement laminate**
Verstärkungslaminat
Stratifié de renfort

(30) Priority: 30.03.1998 US 80014 P; 19.06.1998 US 90011 P; 19.03.1999 US 273107
(43) Date of publication of application: 05.11.2003
(62) Divisional of application: 99913826.6
(73) Proprietor: Henkel Kommanditgesellschaft auf Aktien, 40589 Düsseldorf (DE)
(72) Inventor: Wycech, Joseph S., Grosse Pointe Shores, MI 48236 (US)
(74) Representative: W.P. Thompson & Co.

(56) References cited:
- EP-A- 0 060 561

## Description

### Background of the Invention

The conventional practice to stiffen outer automotive body panels is with a sheet thermoset polymer placed on the inside of a panel and then heat cured in a paint oven. The conventional heat cured stiffener is applied as a wallpaper sheet type applique or as a sprayed on layer. The applique is provided in a single or double layer sheet. The main layer is a thermoset layer with or without a backing. Where a backing is used, the backing can be fiberglass cloth, metal screen, or foil. The spray on is a single polymer layer without a backing. The polymer layer is generally 0,5-2,55 mm (0.020 to 0.100 inches) thick.

In the automotive industry when the vehicle doors are painted during heat cure there is a problem with paint read through due to the heat curing of the outer metal body panel stiffener and the expansion and contraction of the metal outer panel during the paint bake cycle. It would be desirable if some techniques could be provided to eliminate or reduce the paint read through problem.

EP-A-0060561 discloses a structure for reinforcing a plate-like member which includes an expandable portion and a reinforcing cover laminated onto a surface of the expandable portion.

### Summary of the Invention

According to the present invention there is provided a reinforcement lanimate for reinforcing a substrate comprising a carrier layer, an expandable foam layer intimately bonded to said carrier layer to form reinforcing unit, said reinforcing unit having a pair of longitudinal side edges interconnected by a pair of transverse end edges, and at least one of said pair of side edges and end edges being non-straight and undulated.

An object of this invention is to provide a body panel stiffener which improves upon the conventional practices.

A further object of this invention is to eliminate paint shadowing or metal distortion by reducing the cure shrinkage strains during the polymer cure and metal panel curing.

A still further object of this invention is to provide such techniques which are particularly adaptable for the automotive industry.

In accordance with one aspect of this invention a laminate body panel reinforcement or stiffener is provided which includes two polymer layers mounted against a substrate with or without a backing. Preferably, one of the polymer layers is a compliant foam which would be disposed directly against the substrate or structural member being reinforced. An outer or rigid foam layer is secured to the other side of the compliant foam layer and a carrier, such as a foil or fibreglass backing is secured to the outer surface of the rigid foam layer.

In accordance with another aspect of this invention the reinforcing laminate for a part or substrate is made from a stiffener member or backing having an expandable foam secured thereto. In accordance with the invention read through is controlled by various alternative techniques. For example, the read through can be controlled by having no parallel longitudinal edges. This can be achieved by having either wavy and/or saw tooth conditions on two and/or four opposing edges. A further technique to control read through would be by the material polymer thickness and by punching or forming holes through all the polymer and backing layers. The hole pattern can be ordered or uniform or can be in a staggered or a random display.

### Brief Description of the Drawings:

Figures 1 and 2 are cross-sectional views in elevation of prior art stiffeners;
Figure 3 is a cross-sectional view in elevation of a tri-laminate body panel stiffener in accordance with this invention;
Figure 4 is a perspective view showing the stiffener of Figure 3 used for automobile door application;
Figures 5-7 are cross-sectional views of various configurations based on the section A-A of Figure 4;
Figure 8 is a side elevational view showing the inside of a vehicle door having a reinforcement laminate mounted thereto in accordance with a further aspect of this invention;
Figure 9 is a cross-sectional view taken through Figure 8 along the line 9-9;
Figure 10 is a front elevational view of one form of reinforcement laminate; and
Figure 11 is a view similar to Figure 10 of a modified form of reinforcement laminate.

### Detailed Description

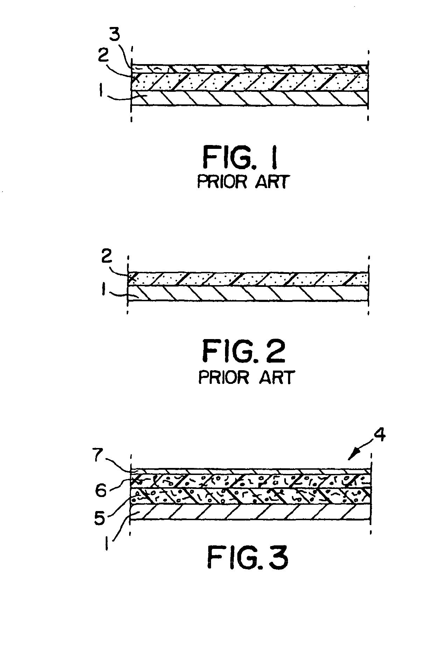

Figures 1-2 illustrate conventional practices for stiffening outer automotive body panels. As shown therein a metal substrate 1 is provided on which a polymer 2 is attached. The application of the polymer 2 which can be a sheet thermoset polymer can be by using a wallpaper sheet type technique as shown in Figure 1 or can be sprayed on as shown in Figure 2. In the practice shown in Figure 1 a fiberglass backing 3 covers the polymer 2. After the polymer 2 is applied it is then heat cured in an oven. Where a wallpaper sheet type applique is used, a single or double layer sheet may be applied. The main layer would be a thermoset layer with or without a backing. In the alternative of Figure 2 a single polymer layer is applied without a backing. Where a backing is used the backing can be fiberglass cloth, metal screen, or foil. Generally, the polymer layer would have a thickness of 0,5-2,55 mm (0.020 to 0.100) inches thick.

The conventional panel stiffeners such as shown in Figures 1 and 2 shrink when they cure. Because of their good adhesion, the cure shrinkage strains are fed into the substrate 1 to which the stiffener is bonded. Consequently, paint on the opposite face of substrate 1 would be patterned according to the induced strains in the substrate.

Figure 3 illustrates a stiffener 4 in accordance with this invention. As shown therein a compliant foam layer 5 is applied directly against the panel or metal substrate 1. A rigid foam layer 6 is applied against the compliant foam layer 5. Figure 3 also illustrates a foil or fiberglass backing or carrier 7 on the outer surface of rigid foam layer 6. This results in a tri-laminate body panel stiffener 4.

When the tri-laminate stiffener 10 cures the first intimate layer 5 can not transfer shrinkage strains to the substrate 1 and layer 5 cannot restrain the outer metal panel from shrinking when the panel comes out of the oven because it is not rigid after cure. The second layer 6 is rigid after cure but its shrinkage strain are blocked from getting to the substrate by the compliant first layer. The backing or carrier 7 is used to provide additional stiffness.

The compliant foam layer 5 absorbs shrinkage strains due to the cure of the heat curable layers. Large shrinkage strains of the rigid layer 6 are not fed in the metal substrate 1 but yet the rigid layer 6 with its backing 7 will stiffen the panel. A typical layer thicknesses are from 1-1.5 mm for compliant layer 5 and 25,4 - 50,0 mm (1-2.0 inches) for rigid layer 6 with backing layer 7 having a thickness of 0,05 - 0,10 cm (0.002-0.004 inch). Any suitable materials may be used for layers 5 and 6. Both polymer layers should be compatible in chemistry, however, otherwise the cured finished product of either layer will be compromised. Reference is made to U.S. Patent No. 5,575,526 and US 6482496. Both patents disclose suitable materials which may be used for the foam layer to create a rigid structural foam and materials for the carrier. The specific materials are not critical provided they function in the intended manner, namely, in that the layer 5 would be compliant while the layer 6 would have rigidity. Compliant layer 5 may have rubber-like characteristics such as materials conventionally used for refrigerator door seals or automobile door strips. Layer 5 may be tacky or non-tacky.

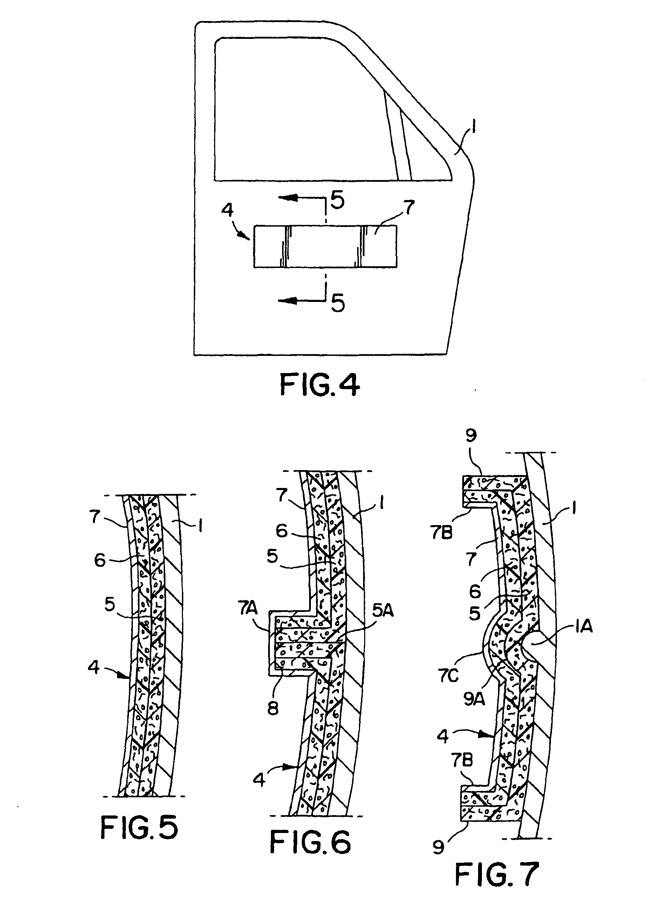

Figure 4 illustrates the foil back laminate 4 of this invention as used for automobile door application. Figures 5-7 illustrate in cross-section different possible configurations for such applications. As is apparent from Figures 3 and 5, the tri-polymer layer stiffener 4 may be of uniform thickness with flat planar layers as illustrated in Figure 3.

Figure 5, however, illustrates a door panel 1 to have a shallow curve configuration. The patch or stiffener 4 would conform to that configuration. Figure 5 shows the stiffener 4 to have uniform thickness. Figures 6-7, however, show variations which could be incorporated which would require non-uniform thickness. As shown, the foil backing or carrier 7 includes an outer channel section 7A forming a rib or bead in combination with the extended portion 8 of the foam layers 5,6. The foam layers 5,6 could be provided as two separate pairs of sheets which abut against each other in the channel section 7A. For example, Figure 6 shows the two foam layers 5 to abut each other at surface 5A. Foil backing 7 may also be made of two layers which abut at the center of channel 7A.

Figure 7 shows end extensions or flanges 7B for the foil backing 7 with conforming end flanges 9 for the pair of foam layers 5,6 in combination with a central extension 7C of the foil backing 7 and a central extension 9A of the foam layers 5,6 to accommodate a rib 1A on the panel 1. The provision of these outward extensions results in rib sections that offer even more panel stiffening than a completely flat and/or uniform laminate because of the increase in section and redistribution of the foil backed laminate reinforcement away from the panel neutral axis. Thus, Figures 6-7 illustrate the stiffener 4 to include stiffening beads while Figure 7 also includes stiffening end flanges.

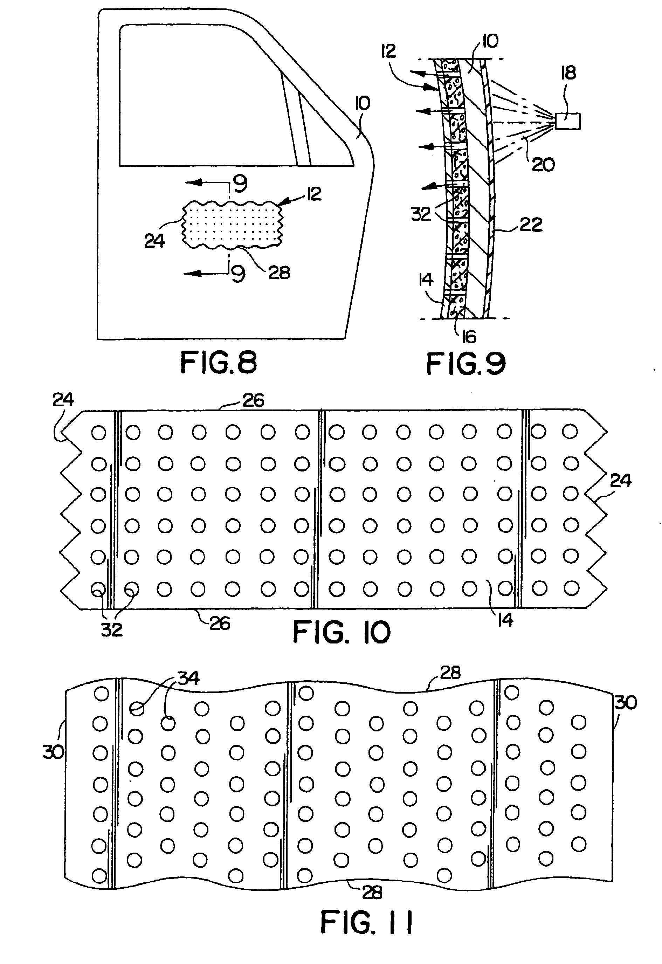

Figures 8-11 relate to another aspect of this invention which is intended to address problems relating to paint read through which cause shadowing or metal distortion. The techniques involved in Figures 8-11 may be used in combination with the tri-laminate structure of Figures 3-7 or may be used separately from those features.

In general, the invention illustrated in Figures 8-11 includes providing a laminate stiffener or reinforcement laminate for a part or substrate. The materials of the laminate and of the substrate to which it would be applied and the uses of the invention may be those discussed with respect to Figures 3-7.

As shown in Figures 8-9 the part or substrate 10 being reinforced is a vehicle door. A reinforcement laminate 12 is mounted to the door preferably at generally the central area of the door. The laminate may be of any suitable size and shape. In the preferred embodiment the laminate is of generally rectangular shape having certain modifications which will be later discussed. Laminate 12 comprises a backing 14 and an intimately bonded expandable foam layer 16. Foam layer 16 may be a single rigid structural foam layer such as in my previously noted patent and application or may be of two layer form as illustrated, for example, in Figure 3. Layer 16 is disposed against the substrate 10. Where the invention is used in the automotive industry Figure 9 schematically shows a paint spray nozzle 18 applying a pattern of paint 20 to create a paint layer 22 on the substrate 10. Where part 10 is in a paint oven in which the polymer 16 cures, there might be a problem with paint read through of the heat cured outer metal panel body stiffeners. The present invention provides various techniques for eliminating or reducing such paint read through.

Figure 10 illustrates one practice of the invention where the laminate has a pair of longitudinal side edges 26,26 interconnected by a pair of transverse end edges 24,24. As shown therein the opposed end edges 24,24 are of non-straight linear configuration forming hills and valleys. Specifically, in the embodiment illustrated in Figure 10 the edges 24,24 are of saw tooth construction. Intermediate edges 26,26 are illustrated as being straight edges parallel to each other. It is to be understood, however, that edges 26,26 may also be of non-straight shape such as having saw-tooth construction so that all four edges have peaks and valleys. Alternatively, edges 26,26 may have the saw tooth construction and edges 24,24 may be straight parallel edges.

Figure 11 illustrates a variation wherein the longitudinal edges 28,28 have peaks and valleys by being undulated or wavy. The intermediate edges 30,30 are illustrated as being straight and parallel. The invention, however, may be similarly practiced where edges 30,30 are also of wavy construction similar to edges 28,28 or where the wavy construction is on edges 30,30, but edges 28,28 are straight and parallel.

Figure 8 illustrates the further possibility of saw-tooth edges 24 and wavy edges 28. Thus, any arrangement of creating peaks and valleys may be used within the broad practices of this invention including different forms of structure to achieve the peaks and valleys along different edges.

In accordance with a further practice of the invention read through is controlled by the material polymer thickness and by punching or otherwise forming holes through all of the polymer and backing layers. Figure 10, for example, shows a pattern of holes 32 in a uniform or ordered array where all of the holes are arranged in straight rows and columns in line with each other. Figure 11, however, shows the holes 34 to be in straight rows and columns which are staggered. The invention may also be practiced where the holes are in a random pattern, rather than straight rows and columns.

Where holes are provided through the laminate 12, the laminate may optionally include the non-straight edges such as the saw tooth and wavy formations or optionally the laminate could have some or all of the edges straight.

The invention may be practiced by forming the backing layer 14 of the desired shape which includes the non-straight edges. The polymer or unexpanded foam may then be coated on or otherwise applied to the entire surface of backing 14 to form the laminate 12. The laminate 12 would then be mounted to substrate 10 by positioning the polymer layer 16 against the substrate 10. When the polymer is activated, the foam expands and would move backing layer 14 outwardly further away from substrate 10. The foam would also expand outwardly beyond the edges of backing 14. The various techniques used for practicing the invention would result in reducing or eliminating paint shadowing or metal distortion by reducing shrinkage strains during the polymer cure. While the invention is preferably practiced with a heat expandable polymer the invention may also be practiced with other types of expandable polymers, such as chemically activated as in the above noted application.

Although the invention has been particularly described with respect to its preferred use for reinforcing vehicle doors the concept of the invention may be applied for reinforcing other parts. For example, the invention may be used for roofs, deck lids and fenders of vehicles. The invention may also be used for reinforcing non-vehicle parts. Similarly, while the invention is preferably practiced for supporting a metal substrate, other substrates may be used as disclosed in the above noted applications. The backing 14 is preferably a thin metal foil such as an aluminum foil. The invention may be practiced, however, with other backing materials such as described in the above noted applications.

The provision of the various techniques for controlling paint through may be incorporated in stiffening reinforcements which include the added features of the above noted applications or which are simply part of a basic structure comprising a backing and foam laminate.

## Claims

1. A reinforcement laminate for reinforcing a substrate comprising a carrier layer, an expandable foam layer intimately bonded to said carrier layer to form reinforcing unit, said reinforcing unit having a pair of longitudinal side edges interconnected by a pair of transverse end edges, and at least one of said pair of side edges and end edges being non-straight and undulated.

2. A laminate as claimed in claim 1, wherein said undulated shape has a pattern of hills and valleys joined together in a smooth wavy pattern.

3. A laminate as claimed in claim 1 or claim 2, wherein said undulated shape has a pattern of hills and valleys in a sawtooth shape.

4. A laminate as claimed in any one of claims 1 to 3, wherein said non-straight and undulated edges are said side edges.

5. A laminate as claimed in any one of claims 1 to 3, wherein said non-straight and undulated edges are said end edges.

6. A laminate as claimed in claim 5, wherein said side edges are also non-straight and undulated.

7. A laminate as claimed in any one of the preceding claims, including a pattern of holes completely through said laminate.

8. A laminate as claimed in claim 7, wherein said pattern of holes comprises a plurality of uniformly and equally spaced aligned rows and columns of holes.

9. A laminate as claimed in claim 7, wherein said pattern of holes comprises a plurality of holes arranged in staggered rows and columns.

10. A laminate as claimed in claim 7, wherein said pattern of holes is randomly arranged.

11. A laminate as claimed in any one of the preceding claims, in combination with said substrate, and said foam layer being intimately bonded to said substrate.

12. A laminate as claimed in any one of the preceding claims, wherein said substrate is an automobile door.

## Patentansprüche

1. Verstärkungslaminat zum Verstärken eines Substrats, das Folgendes umfasst: eine Trägerschicht, eine ausdehnbare Schaumstoffschicht, die mit der genannten Trägerschicht innig verbunden ist zum Bilden einer Verstärkungseinheit, wobei die genannte Verstärkungseinheit ein Paar longitudinaler Seitenränder aufweist, das durch ein Paar transversaler Endränder verbunden ist, und wenigstens eines der genannen Seitenrand- und Endrandpaare ungerade und gewollt ist.

2. Laminat nach Anspruch 1, bei dem die gewellte Form ein zu einem weichen welligen Muster zusammengefügtes Muster von Höhen und Täler hat.

3. Laminat nach Anspruch 1 oder Anspruch 2, bei dem die genannte gewellte Form ein Muster von Höhen und Täler in Sägezahnform hat.

4. Laminat nach einem der Ansprüche 1 bis 3, bei dem die genannten ungeraden und gewellten Ränder die genannten Seitenränder sind.

5. Laminat nach einem der Ansprüche 1 bis 3, bei dem die genannten ungeraden und gewellten Ränder die genannten Endränder sind.

6. Laminat nach Anspruch 5, bei dem die genannten Seitenränder ebenfalls ungerade und gewellt sind.

7. Laminat nach einem der vorhergehenden Ansprüche mit einem völlig durch das genannte Laminat hindurchgehenden Lochmuster.

8. Laminat nach Anspruch 7, bei dem das genannte Lochmuster eine Mehrzahl von einheitlich und gleichmäßig beabstandeten fluchtenden Reihen und Spalten von Löchern umfasst.

9. Laminat nach Anspruch 7, bei dem das genannte Lochmuster eine Mehrzahl von Löchern umfasst, die in versetzten Reihen und Spalten angeordnet sind.

10. Laminat nach Anspruch 7, bei dem das Lochmuster zufällig angeordnet ist.

11. Laminat nach einem der vorhergehenden Ansprüche in Kombination mit dem genannten Substrat und wobei die genannte Schaumstoffschicht mit dem genannten Substrat innig verbunden ist.

12. Laminat nach einem der vorhergehenden Ansprüche, bei dem das genannte Substrat eine Autotür ist.

## Revendications

1. Stratifié de renforcement destiné à renforcer un substrat comprenant une couche-support, une couche en mousse expansible laquelle est étroitement liaisonnée à ladite couche-support afin de constituer une unité de renforcement, ladite unité de renforcement ayant une paire de bords latéraux longitudinaux qui sont interconnectés par une paire de bords d'extrémité transversaux, et l'un au moins des bords de ladite paire de bords latéraux et des bords d'extrémité étant non-rectiligne et ondulé.

2. Stratifié, selon la revendication 1, dans lequel ladite forme ondulée a un schéma de crêtes et de creux qui sont reliés les uns aux autres suivant un schéma onduleux régulier.

3. Stratifié, selon la revendication 1 ou la revendication 2, dans lequel ladite forme ondulée a un schéma de crêtes et de creux suivant une forme en dents de scie.

4. Stratifié, selon l'une quelconque des revendications 1 à 3, dans lequel lesdits bords non-rectilignes et ondulés sont constitués desdits bords latéraux.

5. Stratifié, selon l'une quelconque des revendications 1 à 3, dans lequel lesdits bords non-rectilignes et ondulés sont constitués desdits bords d'extrémité.

6. Stratifié, selon la revendication 5, dans lequel lesdits bords latéraux sont également non-rectilignes et ondulés.

7. Stratifié, selon l'une quelconque des revendications précédentes, qui comprend un schéma de trous lesquels traversent complètement ledit stratifié.

8. Stratifié, selon la revendication 7, dans lequel ledit schéma de trous se compose d'une pluralité de rangées et de colonnes de trous alignés suivant un espacement égal et uniforme.

9. Stratifié, selon la revendication 7, dans lequel ledit schéma de trous se compose d'une pluralité de trous lesquels sont agencés en rangées et en colonnes en quinconce.

10. Stratifié, selon la revendication 7, dans lequel ledit schéma de trous est agencé de manière aléatoire.

11. Stratifié, selon l'une quelconque des revendications précédentes, en combinaison avec ledit substrat, et ladite couche en mousse étant étroitement liaisonnée audit substrat.

12. Stratifié, selon l'une quelconque des revendications précédentes, dans lequel ledit substrat se présente sous la forme d'une portière automobile.
